# EUROPEAN PATENT APPLICATION

(11) **EP 1 486 908 A1**
(43) Date of publication of application: **15.12.2004**
(21) Application number: 03291406.1
(22) Date of filing: 12.06.2003
(51) Int. Cl.: G06K 19/07, G06K 7/00

(54) **Smart card with two I/O ports for linking secure and insecure environments**

(71) Applicant: Axalto S.A., 92120 Montrouge (FR)
(72) Inventor: Joffray, Olivier, 78810 Feucherolles (FR)
(74) Representative: Renault, Patricia Marie Jacqueline

(57) **Abstract**

The present invention concerns a method for performing secure operations that require the input of secure information in a system comprising a processing data unit (PC, ...) connected to a portable object (1), the portable object being connected to a device (21), characterized in that it consists in receiving said secure information in said portable object from said device through an input/output of said portable object assigned to be connected with the device, physically distinct from an input/output of said portable object assigned to be connected with the processing data unit.

## Description

The present invention concerns the domain of portable object and more particularly of smart card allowing to perform secure operations.

This invention is applicable to all applications involving a smart card embedding several input/output channels (e.g. IO1 + IO2) (IO is an input/output).

### TECHNICAL FIELD

Cards with integrated circuit also called smart cards are small plastic devices which contain one or more embedded integrated circuits. A card with integrated circuit can be for example a memory card or a microprocessor card called also microprocessor chip card. A smart card is accessed with a card reader that has an aperture or slot or else into which the smart card is inserted. The smart card reader covers every device used to receive or to be connected with a smart card and work with it (read, write, delete, and/or every possible operation). The smart card reader can be part or linked with a computer, a pin pad or else... The present invention covers smart cards but also every portable object provided with integrated circuit allowing to work or dialog with at least one portable object accepting device, and in embodiments described hereafter, portable object with at least one integrated circuit designed to offer security functions such as authentication, validation, encryption/decryption, secure storage, .... The portable object accepting device may have the form of a housing provided with an aperture or slot to receive the portable object but also any form allowing the portable object to be connected to the portable object accepting device.

The invention described in patent WO00/56007 filed by the present applicant on March 17, 2000 consists in verifying a message signature. In said patent, the smart card receives the message and the corresponding certificate from a personal computer (PC), verifies the certificate and transmits to display means at least result information of verification in order to check the certificate. The same principle applies for the message and the signature.

When the user has checked the certificate, the message or the signature, he presses a button or enters a confidential code that is transmitted to the card through the input/output (I1/01) of the card connected to the insecure environment. Hence, it is possible to modify the housing in which the card is inserted in order to tap the confidential code or data and send it over Internet or to send a false acceptance to the card.

There are many types of secure operation which require the secure input of information (a Personal Identification Number (PIN), a validation acknowledgment, a confidential data...) and which can be controlled by a smart card or any other secure component, in an unsecured environment constituted by a processing data unit for example a personal computer (PC) which can be open or not trustable. However, all the security brought by the smart card may be useless because PC is not a trustable environment : it constitutes an open system.

For example, Internet offers many use cases where the user has to perform some validation on-line, for instance, when purchasing some goods, or later-on on-line pages (news paper, data base searching...). When validating engages the user responsibility, some precaution should be taken. In such case the issue is always how being sure the data we are validating is really the one we suppose it is.

Entering a Personal Identification Number (PIN) might also be required, which when performed through the PC keyboard induce the risk of having it being tapped in said PC.

These concerns have the same origin as the electronic signature issue. A Trojan horse virus may perform some internal changes in the computer that makes you validating a data that is not really the one you think it is, or it might tap the PIN when the user enters it.

The present invention consists in offering a smart and secure gateway, that constitutes a closed, secured and controlled environment such as a smart card with at least two inputs/outputs, one is dedicated to send and receive data to and from an insecure environment, another is dedicated to send and receive data to and from a secure environment (point of sale pin pad, ATM, private pin pad, secure network) in order to perform operations which require a security control such as validating a transaction, checking a signature, encrypting or decrypting...

### BRIEF DESCRIPTION OF THE DRAWINGS

Other purposes, features and advantages of the invention will appear on reading the description which follows of the implementation of the method according to the invention and of a mode of realisation of a portable object designed for this implementation, given as a non-limiting example, and referring to the attached drawings in which:
- figure 1 is a schematic view of an example of realization of an electronic unit integrated in a portable object such as a smart card ;
- figure 2 is a schematic view of a non-limiting mode of realization of a smart card designed to implement the method according to the present invention;
- figure 3 is a schematic view of a practical example of a use of the smart card according to the present invention;
- figure 4 is a schematic view of another practical example of a use of the smart card according to the present invention.

### BEST WAY OF REALISING THE INVENTION

This invention belongs to the field of portable object 1 provided with at least memory means and connectors able to connect said portable object to at least an object-accepting device with which the portable object is able to work or dialog.

The method according to the present invention allows to perform secure operation in an insecure environment by using a portable object that constitutes a smart and secure gateway between said insecure environment and a secure one.

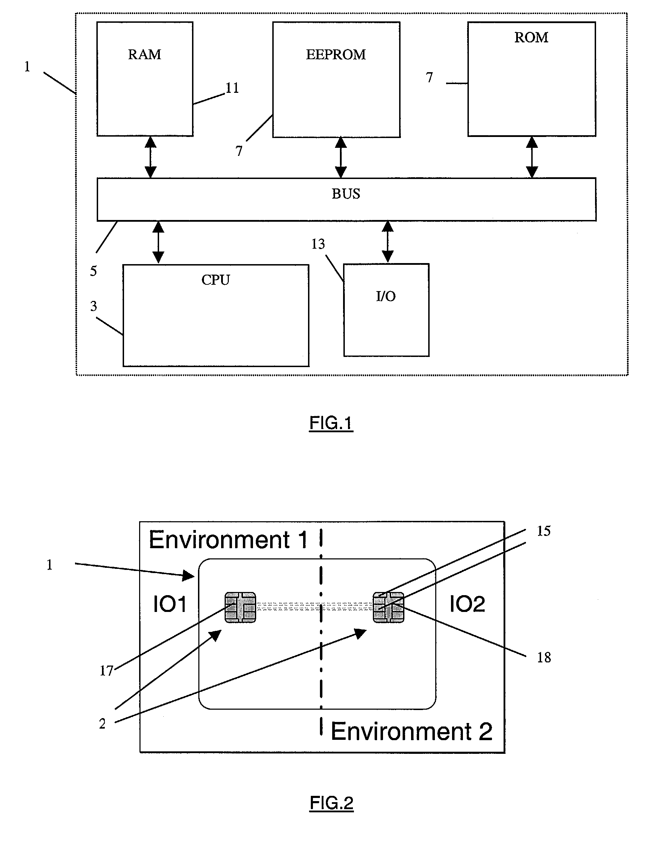

In a particular embodiment of the present invention shown in figure 1, the portable object 1 is a smart card with an integrated electronic unit 2: the electronic unit 2 comprises at least a microprocessor CPU 3 with two-way connection via an internal bus 5 to a non volatile memory 7 of type ROM, EEPROM, Flash, FeRam or else storing at least a program to be executed, a volatile memory 11 of type RAM and input/output means 13 to communicate with the exterior. The unit 2 may comprise additional components not shown, connected to the internal bus. This type of unit is generally manufactured as a monolithic integrated electronic circuit, or chip, which once physically protected by any known means can be assembled on the integrated circuit card or similar for use in various fields, such as the bank and/or electronic payment cards, mobile radio telephony, pay television, health and transport. The chip integrated in the thickness of the card is connected to a module which comprises a set of flat connectors 15 on the surface of the card as shown on figure 2.

The principle of the present invention is the following:

As shown in figure 2, the portable object 1 constitutes a secured and controlled environment with at least two inputs/outputs 17, 18 (I/O1, I/O2).

One I/O(or I/Os), the insecure I/O(s), is(are) dedicated to support the exchanges with an insecure or uncontrolled environment (i.e. an environment on which the user cannot rely without restriction such as a PC or a POS device).

The other I/O(s), the secure I/O(s), is(are) connected to environment(s) on which the user relies (e.g. a personal PIN pad). All the information needed to perform the secure operation from the user is transmitted to the portable object through the secure input/output.

Hence, the user, knowing the insecure environment should not be used, shall connect a keyboard to the secure I/O connected to the secure environment to send the confidential data. If this datum is a PIN, he would connect dedicated keyboard to the secure I/O.

The term "connected" has a very large meaning : "connected" means that the connected devices are linked in such a way that they can transmit information with each other. The devices can be connected through many types of connections (wires, radio, ...).

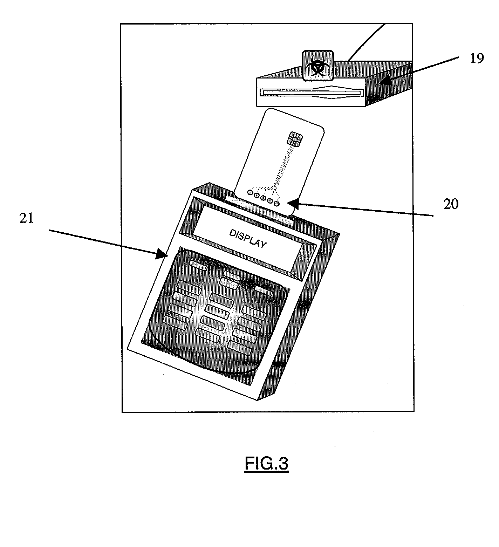

Here after is described an example of embodiment of the present invention with reference to figure 3.

A user has a payment card. He uses it to buy goods or services on the Internet from home using its PC. The card is directly connected to a USB (Universal Serial Bus) PC host through a card accepting device 19 only made of electronic wires. It is compatible with USB standard, and recognized by the PC. The smart card application requires a PIN to be presented for payment. In order to avoid the user to type its PIN on the PC keyboard, a second set of connectors 20 is dedicated for the connection with the PIN pad 21 equipped with the adequate keyboard and display.

The PC is an insecure environment because a virus could perform unwanted actions that the user does not see, including addressing a smart card.

The user wants to perform a transaction over the Internet, here purchasing goods or services. He connects its computer to the merchant site. Having chosen the goods or services he wants, the user checks out the Internet site for payment. Having verified the list of its purchases, the user is invited to introduce his payment card on his reader. The user introduces his card the USB side first. A communication channel is established between the card and the PC through the card insecure I/O1. The Internet site verifies the card as it can access it transparently. The reading of a data in the card (e.g. application reference) allows detecting that the card requires a personal PIN pad to complete a payment over the Internet. A message asking the user to connect the personal PIN pad is displayed.

The user connects the card to its personal PIN pad. This second communication channel flows through the secure card I/O2. The PC powers the personal PIN pad through the card that relays VCC and GND connectors to the PIN pad side (wires are coated in the card plastic body).

The insecure I/O1 is dedicated for USB communication. The secure IO2 is compatible with the PIN pads specific protocols. The card searches for the personal PIN pads.

The PC enters in a payment session, and receives the essential transaction data (price, goods/services list, article references, banking establishment name...) from the Internet site. They are displayed on its screen, asking the user to confirm the payment session.

The user confirms or cancels the transaction by pressing a key on its personal PIN pad. The key press is relayed to the PC by the smart card that receives it from the secure I/O2 and sends it through the insecure I/O1. This allows verifying the personal PIN pad works correctly. In the mean time, the card sends the data required to continue the transaction to the host (a random to establish a session key, cryptographic keys references, authentication data...).

To complete the transaction, the card needs the owner PIN to be presented. It waits it from the secure I/O2 in order to prevent the tapping of the insecure I/O1 that is connected to the insecure environment.

Hence, the card, the PIN pad and the PC enter in a PIN entering session.

Each time the user press numeric key, the card stores its value in its memory, and sends a '*' (star character) to the PC. The entire PIN entering session is handled using the same principle. At the end, the user validates, or cancels, the PIN by pressing a dedicated key.

The card verifies the PIN if it was validated. Assuming the PIN value is correct, the card continues the transaction. Otherwise, it is canceled.

According to another example of embodiment, if a document has to be sent signed, it is prepared in a trustable environment, and sent to the security gateway that sign it (and may encrypt it). Then it can be provided to a connected PC for sending via e-mail, or any other mean.

The basic cryptographic functions embedded in the gateway ensure at least the signing and the encryption/decryption of the data, but should be drawn to all cryptographic functions such as authentication, privacy, non-repudiation, replay prevention, data tagging...

Depending on the requirement, the trustable environment might be constituted by a trustable PC or a network of PC or else. The most important is to forbid any access to such a network except through the security gateway.

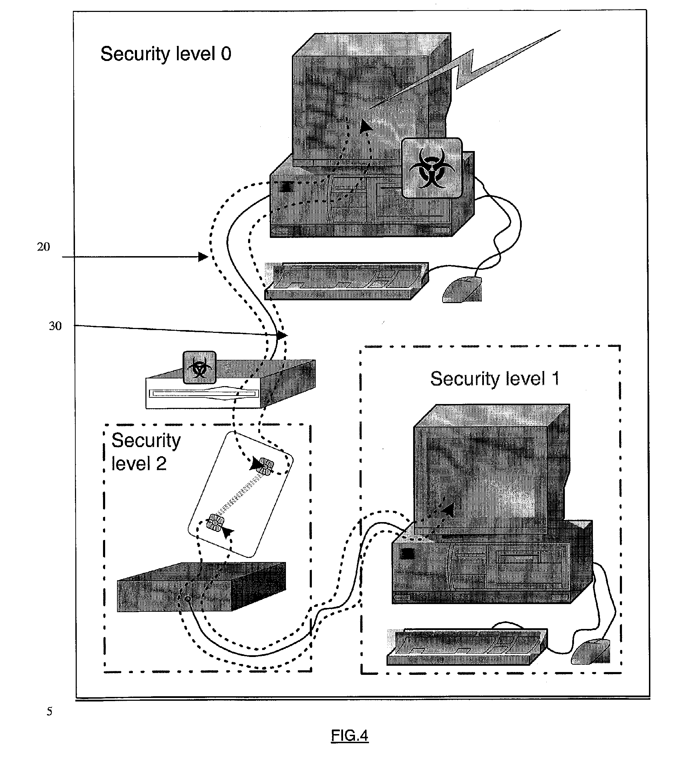

According to another example of embodiment illustrated on figure 4, a document with a signature to verify follows the path 20, while a document to sign follows the path 30.

Assuming a smart card is a very secured environment, a standalone PC, or very controlled PC network, can be considered as a "secured area".
A "secured area" is not as secured as a smart card, but one can assume it is a trustable working environment.
Consequently, we can define three different levels of security:
- Level 0: any standard PC, possibly connected to the Internet, which as not been prepared for a particular security task (e.g. desktop or laptop PC)
- Level 1: a PC, or network of PCs, specifically designed to perform some tasks requiring a dedicated security level. Such computers are not connected to the outside word using usual means, and may not have any floppy, CD or DVD reader/player (i.e. inputs and outputs should be totally under control). It also should be placed in a secure office in order to control its access (i.e. physical access control)
- Level 2: a smart card or equivalent, which represents here the highest level of security, as this consideration is taken into account from the beginning to the end of its life cycle. This also includes software and hardware development, personalization consideration, security lock, ...

The important elements to remember are:

A security level 0 environment cannot be used for signing or verifying a document.
*This is an insecure environment.*
A security level 1 environment is not secure enough for signing or verifying a document. The cryptographic keys required to perform the signature are a too sensitive data. By the way, level 1 should be enough to edit, display or print the document to sign and to verify. *This is a trustable environment.*
A security level 2 environment is specifically designed to handle sensitive data such as cryptographic keys. It is designed, loaded, upgraded and personalized in a secure environment. It is subject to security policy from its conception to its end of life. *This is a secure environment*.

The smart card ensures a security gateway function between the insecure and the trustable security environment. An adequate protocol (e.g. ber tlv) allows detecting protected data (using cryptographic means). If the data the smart card receives is not sealed, it is rejected. Assuming the smart card and the electronic device do not have enough memory to store a complete document, the data is sent to the security level 1 environment where it is temporarily stored (specific transition area). When all the data are received, and if the cryptographic verifications are successful, the smart card displays the result of a hashing calculation on the electronic device display. In the mean time, the PC placed in the security level 1 environment performs the same calculation and display the result. The user compare the two displayed hashing calculation results. If it is they are equal, then it validates its verification by pressing the button on the electronic device. Receiving the confirmation from the electronic device, the secured PC moves the data from the temporary storage location to the working location in order to use the data.

In the other way, if the data is to be signed, it is sent to the smart card through the electronic device (from level 1 security environment). There are many other types of application of the present invention and for example there are applications where the smart card is provided with more than two inputs/outputs in order to receive information from different devices part of environments of different security levels.

## Claims

1. System for performing secure operations that require the input of secure information comprising a processing data unit (PC, ...) connected to a portable object (1), the portable object being connected to a device (21), **characterized in that** said portable object comprises at least two inputs/outputs (17, 18) physically distinct assigned to be connected respectively with the processing data unit and the device in order that the device sends said secure information to the portable object through the assigned input/output.

2. System according to claim 1 **characterized in that** the only logic link between data circulating between the portable object and the processing data unit and the portable object and the device is the software of the portable object.

3. Portable object for performing secure operations which require the input of secure information intended to be connected with a processing data unit (PC, ...) and with a device (21) **characterized in that** said portable object comprises at least two inputs/outputs (17, 18) physically distinct assigned to be connected respectively with the processing data unit and the device in order that the device sends said secure information to the portable object through the assigned input/output.

4. Portable object according to claim 3, **characterized in that** the portable object is a card with integrated circuit.

5. Portable object according to one of the claims 3 or 4, **characterized in that** the only logic link between data circulating between the portable object and the processing data unit and the portable object and the device is the software of the portable object.

6. Electronic unit intended to be integrated in a portable object according to one of the claims 3 to 5.

7. Method for performing secure operations that require the input of secure information in a system comprising a processing data unit (PC, ...) connected to a portable object (1), the portable object being connected to a device (21), **characterized in that** it consists in receiving said secure information in said portable object from said device through an input/output of said portable object assigned to be connected with said device, physically distinct from an input/output of said portable object assigned to be connected with said processing data unit.

8. Method according to claim 7, **characterized in that** the only logic link between data circulating between the portable object and the processing data unit and the portable object and the device is the software of the portable object.

9. Application of the method according to one of the claims 7 or 8 to the validation of information consisting in validating information by inputting secure information in said device when the information to validate given by said processing data unit is correct and by sending the information of validation through said portable object assigned input/output.

10. Computer program including program code instructions to execute the method according to one of claims 7 to 8 when said program is run in a data processing system.
